# EUROPEAN PATENT SPECIFICATION

(11) **EP 0 599 903 B1**
(45) Date of publication and mention of the grant of the patent: **08.11.1995**
(21) Application number: 92917073.6
(22) Date of filing: 04.08.1992
(51) Int. Cl.: C23F 1/28, C23F 3/06, C23G 1/08

(54) **HYDROFLUORIC ACID COMPOSITIONS**
ZUSAMMENSETZUNG VON FLUORWASSERSTOFFSÄURE
COMPOSITIONS A BASE D'ACIDE FLUORHYDRIQUE

(30) Priority: 17.08.1991 GB 91178236
(43) Date of publication of application: 08.06.1994
(73) Proprietor: Laporte Industries Limited, London WC1B 3RA (GB)
(72) Inventor: McDONOGH, Colin Frederick, Appleton Park, Warrington WA4 5DZ (GB); McINTYRE, Lachlan Alan, Rozelle, NSW 2039 (AU)
(74) Representative: Green, Mark Charles
(86) International application number: EP9201763
(87) International publication number: WO9304216

(56) References cited:
- WO-A-91/05079
- US-A- 3 407 141
- US-A- 3 756 957
- US-A- 4 770 808

## Description

The present invention concerns hydrofluoric acid compositions. In a further aspect, the present invention also relates to a process for stabilising aqueous hydrogen peroxide solutions that are intended for use in metal surface treatments.

One of the many uses for hydrogen peroxide solutions, and especially aqueous acidic hydrogen peroxide solutions, comprises the treatment of metal surfaces so as to alter their appearance and to impart chemically to the surface a desired sheen or polish. This is often referred to simply as pickling or polishing. Conventionally, solutions for that use contain one or more strong acids, which is normally a mineral acid, as well as the hydrogen peroxide. In the course of the metal surface treatment, there is a tendency for the solution to dissolve metal or impurities from the metal surface and to strip away particulate particles that had adhered to the metal surface before the treatment commenced. The metals that are pickled or polished usually comprise or contain at least a proportion of transition metals, such as iron or copper, which catalyse the wasteful decomposition of hydrogen peroxide in aqueous solution into oxygen and water. In view of its decomposition in situ, hydrogen peroxide often represents the major consumable cost in a pickling or polishing process. In consequence, the industry continues to seek ever more effective ways of reducing the rate and/or extent of the decomposition. In many instances, it has been sought by introducing into solution one or more substances that are often called stabilisers, which interact with the metal ions and/or metal surface and/or the hydrogen peroxide itself in such a way as to reduce the rate or extent or modify the manner of the interactions between the metal ions and hydrogen peroxide causing decomposition.

There have been many different chemical types of stabilisers proposed or employed. The literature directed to peroxide stabilisation during metal surface treatment processes includes many organic compounds as stabilisers such as a range of organic acids or unsaturated aliphatic acids in USP3537895 by L E Lancy, aromatic alcohols or unsaturated aliphatic alcohols in USP3869401 by R E Ernst, saturated alcohols in USP3556883 by A Naito et al, amines, amides and mines in USP3756957 by S Shiga, aryl sulphonic or sulphamic acids or related compounds in USP3801512 by J C Solenberger et al and solid poorly soluble stabilisers like hydroxybenzoic acid in USP4770808 by C F McDonogh et al. Many other stabilisers have been suggested for peroxide solutions including substances that chelate the metal ions or precipitate them out of solution, for example in USP4059678 to D C Winkley. The literature also includes references to inorganic substances, such as phosphoric acid in USP3373113 to Achenback. Accordingly there is a wide pool of stabilisers from which the user can select.

Despite the foregoing, it was found that there remained a significant problem of stabilising hydrogen peroxide during the metal surface treatment of steel with aqueous sulphuric acid solutions of hydrogen peroxide. This was because the greater part of the literature was directed to the treatment of copper surfaces and the authors extrapolated to the treatment of other metals without adequate experimental support. To some extent, this is demonstrated in USP3407141 to R S Banush et al, which seeks to etch copper with acidic hydrogen peroxide solutions of long storage life that contain certain urea and aromatic acid compounds. The specification suggests that the treatment can be applied to certain other metals but also that the solutions are less effective on certain other metals such as stainless steel. Since the patent disclosed results, solely with copper, comments regarding other metals may be regarded simply as speculation.

A suitable stabiliser system for acidic hydrogen peroxide solutions which are severely contaminated with dissolved iron, resulting for example from the surface treatment of steels, is disclosed in WO-A-91/05079. The stabiliser comprises hydrofluoric acid, an aromatic acid such as p-hydroxybenzoic acid and an aromatic amide such as N-(4-ethoxy-phenyl)-acetamide (phenacetin). The concentration of hydrofluoric acid is disclosed as being from 0.5 to 10 % by weight of the stabilised hydrogen peroxide solution, with 4 % by weight being specifically exemplified. The concentrations of the aromatic acid and amide in solution are disclosed as being from at least 0.5g/l to saturation in the stabilised hydrogen peroxide solution. In such stabilised aqueous solutions, where the concentration of HF is less than 10% by weight, the saturation point of phenacetin is no more than 2g/l. To maintain the phenacetin concentration at saturation during use of the stabilised hydrogen peroxide solution in a steel pickling bath, it has been practice to add phenacetin to the bath solution in the form of a solid phase, such as a powder or block. The powder or block dissolves in the bath solution over a period of time, replacing the spent phenacetin removed from the solution during the pickling process. Regulation of the solid stabiliser is effected by visual inspection or a non-manual system. It is often inconvenient to regulate the solid stabiliser manually, and the provision of monitoring equipment to automatically regulate the solid stabiliser may be expensive.

It is an object of the present invention to remove the necessity of regulating the solid stabiliser in hydrogen peroxide solutions.

In accordance with the present invention, there is provided a hydrofluoric acid composition comprising more than 2g/l N-alkoxyphenyl-acetamide in solution. Preferably, the composition comprises more than 5g/l, yet more preferably more than 7g/l, and most preferably more than 10g/l,N-alkoxyphenyl-acetamide in solution. The N-alkoxyphenyl-acetamide may comprise a mixture of relevant acetamides, although preferably a single acetamide is used. The preferred N-alkoxyphenyl-acetamide used in the composition of the present invention is phenacetin.

The hydrofluoric acid composition comprises more than 10% by weight, preferably at least 20% by weight, more preferably at least 30% by weight and most preferably at least 40% by weight, hydrogen fluoride. Hereafter, such acid solutions shall be referred to as "concentrate" solutions.

It has been surprisingly found that the solubility of N-alkoxyphenyl-acetamides varies with the concentration of hydrofluoric acid. For example, in dilute hydrofluoric acid solutions, where the amount of hydrogen fluoride accounts for 10% or less by weight of the solution, such as in the stabilised hydrogen peroxide solutions disclosed in WO-A-91/05079, the amount of phenacetin in solution at 50-60°C could not be increased above 2g/l, whereas in more concentrated hydrofluoric acid solutions, such as 40% by weight HF in solution, the amount of phenacetin in solution at 50-60°C was more than 10g/l. Accordingly, by using the compositions of the present invention in the preparation of stabilised hydrogen peroxide solutions, essentially no regulation, either manual or automatic, of the N-alkoxyphenyl-acetamide stabiliser is required, since as soon as the concentrate hydrofluoric acid composition is diluted to the working concentration i.e. 10% or less by weight HF in solution, the acetamide precipitates out of solution leaving a saturated solution which is either maintained by the presence of the precipitate or by further addition of hydrofluoric acid solution.

In another aspect, the present invention provides a process for stabilising an aqueous solution of hydrogen peroxide containing at least 1% w/w sulphuric acid which are suitable for treating the surface of steel and like alloys characterised in that there is introduced into the solution an effective amount of a hydrofluoric acid solution comprising more than 2g/l N-alkoxyphenyl-acetamide in solution. Preferably, the hydrofluoric acid solution comprises more than 5g/l, more preferably more than 7g/l and most preferably more than 10g/l N-alkoxyphenyl-acetamide in solution. Preferably the hydrogen peroxide solution additionally comprises hydroxybenzoic acid in a preferred amount of more than 0.5g/l of peroxide solution, most preferably the peroxide is saturated with hydroxybenzoic acid.

In another aspect, the present invention provides a stabilised aqueous solution of hydrogen peroxide containing at least 1% w/w sulphuric acid, hydrofluoric acid and an N-alkoxyphenyl-acetamide in solution characterised in that the acetamide is present in solution in an amount of more than 2g/l, preferably more than 5g/l, more preferably more the 7g/l and most preferably more than 10g/l. The peroxide solution may be diluted with water until the acetamide just begins to precipitate out from the solution when the solution will then be ideal for use in a steel pickling bath.

The N-(alkanoxyphenyl)-acetamide preferably contains a low molecular weight alkanoxy substituent and is most preferably the compound N-(4-ethoxy-phenyl)-acetamide (phenacetin). A mixture of the acetamide compounds or a single acetamide compound may be used in the compositions of the present invention, provided that the total amount of acetamide in solution is above 2g/l.

The solution preferably contains from 0.5 to 10% w/w hydrofluoric acid and advantageously from 1 to 6% w/w.

The concentrations of the aromatic acid and aromatic amide in peroxide solution are each preferably at least 0.5 g/l and most preferably at or near saturation. Since they tend to be relatively poorly soluble in the aqueous peroxide solutions, saturation can be attained by introduction of about 1 g/l up to a few g/l of each.

The hydrogen peroxide is present in the solution of the present invention as a dilute solution. In a bath, the hydrogen peroxide concentration may be from 0.1 to 5% by weight, preferably 1 to 4% by weight. For example, a solution may contain at least 1% w/w hydrogen peroxide. It is unusual for the solution to contain more than 10% w/w. For the treatment of certain steels, it is often convenient to select within the range of from 3 to 8% w/w hydrogen peroxide, though with other steels a peroxide concentration of 0.1% w/w or less may be required. During normal operation, peroxide is consumed, so that without corrective means, its concentration would gradually diminish. At the discretion of the user, he can seek to maintain a steady state by introducing peroxide gradually at a rate that matches its consumption, including decomposition, or he can permit the concentration to fluctuate by augmenting the peroxide concentration periodically. The metal treatment solution is most conveniently obtained by the dilution of a concentrated commercial hydrogen peroxide solution, typically containing from 35 to 70% w/w hydrogen peroxide and trace amounts, ie below about 0.1% of known storage stabilisers such as pyrophosphate and/or stannate and/or polyphosphonic acid compounds.

The sulphuric acid concentration in the solution of the present invention is normally not higher than 20% v/v and in many instances is conveniently selected in the region of 5 to 15% v/v.

The solutions of the present invention may also include minor amounts of the customary additives in metal treatment solutions, such as up to about 2% w/w wetting agents.

The processes using the stabilised hydrogen peroxide solutions of the present invention are normally carried out at a bath temperature of ambient or higher, and in many instances in the range of from 40 C to 70 C. Higher temperatures of up to about 80 C are less often encountered, but become more attractive as a result of the stabilisation of the hydrogen peroxide component in the bath.

The residence period for the work-piece in the treatment bath is at the discretion of the user and naturally depends on the finish that it is desired to achieve and the form of the steel eg. tube, wire , sheet etc. Residence periods are often selected in the range of from less than 5 minutes, eg 10 seconds, to 60 minutes or more.

The stabilised acidic hydrogen peroxide solutions are primarily intended for the picking or polishing of steels, including mild steel and is of especial value for treating stainless steels. Steels suitable for treatment by the invention process and compositions can contain minor proportions of such metals as chromium, nickel, and manganese; ie the metals that are incorporated in corrosion-resistant or stainless steels. It will be recognised that the process and compositions according to the present invention can be employed instead of nitric acid-containing metal treatment compositions, thereby avoiding the problems of NOx emissions that accompany the use of nitric acid.

Having described the invention in general terms, specific embodiments thereof will now be described in more detail by way of example only.

### Example I

A hydrofluoric acid solution, containing 48% by weight hydrogen fluoride, was warmed to 50-60°C and phenacetin was slowly added to the solution until it became saturated. The solution was filtered and evaluated to determine the concentration of dissolved phenacetin. The solution had a dissolved phenacetin concentration of more than 228g/l.

The solution was allowed to cool to ambient temperature and the solution filtered and evaluated again. The concentration of dissolved phenacetin in the acid solution was found to be more than 10g/l.

### Comparative Example I

A hydrofluoric acid solution, containing 4% by weight hydrogen fluoride, was warmed to 50-60°C and phenacetin was slowly added to the solution until it became saturated. The solution was filtered and evaluated to determine the concentration of dissolved phenacetin. The solution had a dissolved phenacetin concentration of 2.0g/l at ambient temperature.

The results of Example I are surprising when compared with the results of Comparative Example I.

### Example II

A pickling bath composition having the following formulation was prepared by firstly diluting the hydrofluoric acid composition of Example I with aqueous hydrogen peroxide and sulphuric acid and then dissolving therein a Monsel salt (the composition was prepared at 50-60°C):

| Component | Content (by weight) |
|---|---|
| Sulphuric Acid (98%) | 10% |
| Hydrogen Fluoride (100%) | 2% |
| Hydrogen peroxide (100%) | 5.8% |
| Monsel Salt (Fe) | 1% and 2% |
| Water and phenacetin | balance |

The composition was then maintained at 50-60°C for a week, the amount of peroxide remaining in the solution being determined from time to time. The results are as follows:

| Concentration of | | % H₂O₂ | | | | | |
|---|---|---|---|---|---|---|---|
| phenacetin | Fe | Time (hrs) | | | | | |
| | | 23 | 45 | 93 | 117 | 141 | 165 |
| 0 g/l | 1% | <0.2 | <0.2 | | | | |
| 0 g/l | 1% | <0.2 | <0.2 | | | | |
| >10 g/l | 1% | 5.62 | 5.30 | 4.23 | 2.45 | 0.17 | - |
| >10 g/l | 2% | 5.32 | 4.54 | 4.22 | 4.16 | 3.51 | 3.36 |

The results of Example II demonstrate the suitability of the compositions of the present invention in stabilising hydrogen peroxide solutions

## Claims

1. A hydrofluoric acid composition comprising more than 2 g/l N-alkoxyphenyl-acetamide and more than 10% by weight hydrogen fluoride in solution.

2. A composition as claimed in Claim 1 wherein the composition comprises more than 5 g/l N-alkoxyphenyl-acetamide in solution.

3. A composition as claimed in Claim 1 or Claim 2 wherein the composition comprises one N-alkoxyphenyl-acetamide only.

4. A composition as claimed in any one of the preceding Claims wherein the or one of the N-alkoxyphenyl-acetamides is N-(4-ethoxyphenyl)-acetamide (phenacetin).

5. A composition as claimed in any one of Claims 1 to 4 wherein the composition comprises at least 20% by weight hydrogen fluoride.

6. A process for stabilising an aqueous solution of hydrogen peroxide containing at least 1% w/w sulphuric acid which is suitable for treating the surface of steel and like alloys characterised in that there is introduced into the solution an effective amount of a hydrofluoric acid composition comprising more than 2 g/l N-alkoxyphenyl-acetamide and more than 10% by weight hydrogen fluoride in solution.

7. A process as claimed in claim 6 wherein the hydrofluoric acid composition comprises more than 5 g/l N-alkoxyphenyl-acetamide in solution.

8. A process as claimed in claim 6 or claim 7 wherein the hydrogen peroxide solution additionally comprises hydroxybenzoic acid.

9. A stabilised solution of hydrogen peroxide containing at least 1% w/w sulphuric acid, hydrofluoric acid and an N-alkoxyphenyl-acetamide in solution characterised in that the N-alkoxyphenyl-acetamide is present in solution in an amount of more than 2 g/l.

10. A process as claimed in any one of claims 6 to 8 or a solution as claimed in claim 9 wherein the N-alkoxyphenyl-acetamide is N-(4-ethoxyphenyl)-acetamide (phenacetin).

## Patentansprüche

1. Fluorwasserstoffsäure-Zusammensetzung, die mehr als 2 g/l N-Alkoxyphenylacetamid und mehr als 10 Gew.-% Fluorwasserstoffsäure in Lösung enthält.

2. Zusammensetzung nach Anspruch 1, worin die Zusammensetzung mehr als 5 g/l N-Alkoxyhenylacetamid in Lösung enthält.

3. Zusammensetzung nach Anspruch 1 oder 2, worin die Zusammensetzung nur ein N-Alkoxyphenylacetamid enthält.

4. Zusammensetzung nach einem der vorangegangenen Ansprüche, worin das oder eines der N-Alkoxyphenylacetamid(e) N-(4-ethoxyphenyl)-acetamid (Phenacetin) darstellt.

5. Zusammensetzung nach einem der Ansprüche 1 bis 4, worin die Zusammensetzung mindestens 20 Gew.-% Fluorwasserstoff enthält.

6. Verfahren zur Stabilisierung einer wäßrigen Lösung aus Wasserstoffperoxid, die mindestens 1% G/G Schwefelsäure enthält und zur Behandlung der Oberfläche von Stahl und ähnlichen Legierungen geeignet ist, dadurch gekennzeichnet, daß in die Lösung eine wirksame Menge einer Fluorwasserstoffsäure-Zusammensetzung, die mehr als 2 g/l N-Alkoxyphenylacetamid und mehr als 10 Gew.-% Fluorwasserstoff in Lösung enthält, eingegeben wird.

7. Verfahren nach Anspruch 6, worin die Fluorwasserstoffsäure-Zusammensetzung mehr als 5 g/l N-Alkoxyphenylacetamid in Lösung enthält.

8. Verfahren nach Anspruch 6 oder 7, worin die Wasserstoffperoxidlösung weiterhin Hydroxybenzoesäure enthält.

9. Stabilisierte Lösung aus Wasserstoffperoxid, die mindestens 1% G/G Schwefelsäure, Fluorwasserstoffsäure und ein N-Alkoxyphenylacetamid in Lösung enthält, dadurch gekennzeichnet, daß das N-Alkoxyphenylacetamid in Lösung in einer Menge von mehr als 2 g/l vorhanden ist.

10. Verfahren nach einem der Ansprüche 6 bis 8, oder Lösung nach Anspruch 9, worin das N-Alkoxyphenylacetamid N-(4-ethoxyphenyl)-acetamid (Phenacetin) darstellt.

## Revendications

1. Composition d'acide fluorhydrique comprenant plus de 2 g/l de N-alkoxyphényle-acétamide, et plus de 10 % en poids de fluorure d'hydrogène en solution.

2. Composition selon la revendication 1, caractérisée en ce que cette composition comprend plus de 5 g/l de N-alkoxyphényle-acétamide en solution.

3. Composition selon la revendication 1 ou la revendication 2, caractérisée en ce que cette composition comprend un N-alkoxyphényle-acétamide seulement.

4. Composition selon l'une quelconque des revendications précédentes, caractérisée en ce que le ou l'un des N-alkoxyphényle-acétamides est N-(4-éthoxyphényle)-acétamide (phénacétine).

5. Composition selon l'une quelconque des revendications 1 à 4, caractérisée en ce que cette composition comprend au moins 20 % en poids de fluorure d'hydrogène.

6. Procédé de stabilisation d'une solution aqueuse de peroxyde d'hydrogène contenant au moins 1 % en poids d'acide sulfurique, qui convient pour le traitement de la surface d'un acier et autres alliages analogues, caractérisé en ce qu'on introduit dans la solution une quantité efficace d'une composition d'acide fluorhydrique comprenant plus de 2 g/l de N-alkoxyphényle-acétamide, et plus de 10 % en poids de fluorure d'hydrogène en solution.

7. Procédé selon la revendication 6, caractérisé en ce que la composition d'acide fluorhydrique comprend plus de 5 g/l de N-alkoxyphényle-acétamide en solution.

8. Procédé selon la revendication 6 ou la revendication 7, caractérisé en ce que la solution de peroxyde d'hydrogène comprend en outre de l'acide hydroxybenzoïque.

9. Solution stabilisée de peroxyde d'hydrogène contenant au moins 1 % en poids d'acide sulfurique, d'acide fluorhydrique et d'un N-alkoxyphényle-acétamide en solution, caractérisée en ce que le N-alkoxyphényle-acétamide est présent dans la solution en une quantité de plus de 2 g/l.

10. Procédé selon l'une quelconque des revendications 6 à 8 ou solution selon la revendication 9, caractérisés en ce que le N-alkoxyphényle-acétamide est du N-(4-éthoxyphényle)-acétamide (phénacétine).
